# EUROPEAN PATENT APPLICATION

(11) **EP 3 939 857 A1**
(43) Date of publication of application: **19.01.2022**
(21) Application number: 19931230.7
(22) Date of filing: 22.10.2019
(51) Int. Cl.: B61L 25/02

(54) **METHOD AND SYSTEM FOR CORRECTING PRECISION OF MAGNETIC LEVITATION TRAIN TRACTION SYSTEM POSITION CONTROL RING**

(30) Priority: 31.05.2019 CN 201910466150
(71) Applicant: CRRC Zhuzhou Locomotive Co., Ltd, Zhuzhou, Hunan 412001 (CN)
(72) Inventor: LI, Xiaochun, Zhuzhou, Hunan 412001 (CN); LI, Lin, Zhuzhou, Hunan 412001 (CN); HUANG, Xiaoli, Zhuzhou, Hunan 412001 (CN); SONG, Liwei, Zhuzhou, Hunan 412001 (CN); YANG, Ying, Zhuzhou, Hunan 412001 (CN); TONG, Laisheng, Zhuzhou, Hunan 412001 (CN); LUO, Huajun, Zhuzhou, Hunan 412001 (CN)
(74) Representative: Ran, Handong
(86) International application number: PCT/CN2019/112468
(87) International publication number: WO 2020/237985

(57) **Abstract**

Disclosed are a method and system for correcting the precision of a magnetic levitation train traction system position control ring. The precision correction method comprises: step A, a speed measuring system collecting position-related information of a train; step B, sending the position-related information to a traction system through a signal system; and step C, the traction system carrying out closed-loop control on the position of the train according to the position-related information. The method further comprises step A1 before step A: checking the time for the speed measuring system, the signal system and the traction system, and adding timestamp information. According to the correcting method and system, the time is checked for a speed measuring system, a signal system and a traction system, and timestamp information is added, such that the influences of a delay and periodic random shaking are overcome, and the requirement of traction control of a medium-high speed magnetic levitation train is met. By using mature and cheap 4G-LTE wireless communication, the characteristics of high bandwidth, low delay, wide coverage, QoS guarantee and high-speed movement are achieved. A simple and practical method for improving precision of medium-high speed magnetic levitation magnetic pole phase angles is provided, and this has good engineering application prospects.

## Description

### Field of the Invention

The present invention belongs to the technical field of speed measurement and positioning of magnetic levitation trains, and particularly relates to a precision correction method and a precision correction system for a position control ring of a magnetic levitation train traction system.

### Background of the Invention

At present, a magnetic levitation type high-speed magnetic levitation train (hereinafter referred to as a high-speed magnetic levitation train) that meets the requirements of "normally conductive magnetic attraction" utilizes a linear synchronous motor for traction, a mover of the synchronous motor is integrated with a suspension electromagnet, and a stator is installed on a three-phase winding under a track. According to the working principle of the synchronous motor, only when the winding magnetic field of the long stator is synchronous with an excitation magnetic field will a constant traction force be produced. Therefore, the position detection of the high-speed magnetic levitation train is the key to traction control.

A traction system of the high-speed magnetic levitation train is installed in a terrestrial traction control room, and the actual position is obtained by a position detection system installed on the train, and is transmitted to a vehicle-carried wireless communication system through a synchronous RS485 communication channel according to an update cycle of 20ms and a transmission cycle of 512kps, then is transmitted to a terrestrial wireless communication system via 38G and other wireless communications, and finally is transmitted to the traction system via the synchronous RS485 communication channel, so as to realize the closed-loop control of the position of the train.

In the actual control process, there are certain delays in the step of position detection, the step of information processing and packaging and the step of transmitting the detected position information to the traction system, and there are certain delays between these steps. The specific delay time is related to a sensor, and signal processing and signal transmission modes. In addition, the current 38G wireless networks at home and abroad belong to an exclusive wireless communication technology, and products are rarely used in the mature rail transit field and are expensive.

### Summary of the Invention

The purpose of the present invention is to provide a precision correction method and a precision correction system for a position control ring of a magnetic levitation train traction system in view of the above-mentioned shortcomings of the prior art, which can eliminate the time delay and is low in cost.

In order to solve the above technical problems, the technical solution adopted by the present invention is:
A precision correction method for a position control ring of a magnetic levitation train traction system, including:
step A, acquiring, by a speed measuring system, position-related information of a train;
step B, sending, by the speed measuring system, the acquired position-related information to a traction system through a signal system;
step C, performing, by the traction system, closed-loop control on the position of the train based on the position-related information;
wherein, before step A, the method further includes:
   step A1, synchronizing the time of the speed measuring system, the time of the signal system and the time of the traction system, and adding timestamp information.

As a preferred manner, the signal system includes a vehicle-carried wireless communication system and a terrestrial wireless communication system, the speed measuring system is connected with the vehicle-carried wireless communication system, the traction system is connected with the terrestrial wireless communication system, and the vehicle-carried wireless communication system is connected with the terrestrial wireless communication system through a 4G-LTE wireless communication network; and
the position-related information is sent to the traction system through the vehicle-carried wireless communication system, the 4G-LTE wireless communication network and the terrestrial wireless communication system in sequence.

As a preferred manner, the position-related information includes a train speed, a magnetic pole phase angle, and an absolute train position.

As a preferred manner, in the step C, the closed-loop control process includes: using a train kinetic equation, a linear motor mathematical formula and motor parameters to establish a model, performing vector control based on rotor field orientation to achieve dynamic decoupling of a torque and a flux linkage, so as to realize continuous control;
according to the acquired train speed, the magnetic pole phase angle, the absolute train position information and time information, performing least squares fitting to estimate the train position information at this time; and
calculating the delay and jitter amount of the magnetic pole phase angle by simulation, calculating a compensation amount, and correcting the position of a rotor magnetic pole phase angle by using the compensation amount.

As a preferred manner, a Beidou system and/or a GPS system is used for synchronizing the time of the speed measuring system, the time of the signal system and the time of the traction system.

Based on the same inventive concept, the present invention further provides a precision correction method for a position control ring of a magnetic levitation train traction system, including:
a speed measuring system, used for acquiring position-related information of a train;
a signal system, used for receiving the position-related information sent by the speed measuring system, and sending the position-related information to a traction system;
the traction system, used for performing closed-loop control on the position of the train based on the position-related information;
wherein the system further includes:
   a time synchronization system, used for synchronizing the time of the speed measuring system, the time of the signal system and the time of the traction system, and adding timestamp information.

As a preferred manner, the signal system includes a vehicle-carried wireless communication system and a terrestrial wireless communication system, the speed measuring system is connected with the vehicle-carried wireless communication system, the traction system is connected with the terrestrial wireless communication system, and the vehicle-carried wireless communication system is connected with the terrestrial wireless communication system through a 4G-LTE wireless communication network.

As a preferred manner, the position-related information acquired by the speed measuring system includes a train speed, a magnetic pole phase angle, and an absolute train position.

As a preferred manner, the closed-loop control process of the traction system includes:
using a train kinetic equation, a linear motor mathematical formula and motor parameters to establish a model, performing vector control based on rotor field orientation to achieve dynamic decoupling of a torque and a flux linkage, so as to realize continuous control;
according to the acquired train speed, the magnetic pole phase angle, the absolute train position information and time information, performing least squares fitting to estimate the train position information at this time; and
calculating the delay and jitter amount of the magnetic pole phase angle by simulation, calculating a compensation amount, and correcting the position of a rotor magnetic pole phase angle by using the compensation amount.

As a preferred manner, a Beidou system and/or a GPS system is used for synchronizing the time of the speed measuring system, the time of the signal system and the time of the traction system.

Compared with the prior art, the present invention has the following beneficial effects:
(1) The time of the speed measuring system, the time of the signal system and the time of the traction system are synchronized, and the timestamp information is added, such that the influences of a delay and periodic random jitter of the magnetic pole phase angle, the position and speed information in the wireless transmission process is overcome, and the requirement of traction control of a medium-high speed magnetic levitation train is met.
(2) By using mature and cheap 4G-LTE wireless communication network, the present invention has technical advantages of high bandwidth, low delay, wide coverage, QoS guarantee and high-speed movement.
(3) A simple and practical method is provided for improving the precision of magnetic pole phase angles of medium-high speed magnetic levitation train, and thus has good engineering application prospects.

### Detailed Description of Embodiments

A precision correction method for a position control ring of a magnetic levitation train traction system includes:
Step A1, the time of a speed measuring system, the time of a signal system and the time of a traction system are synchronized by using a Beidou system and/or a GPS system, and timestamp information is added, so as to eliminate the influence of transmission period delay and jitter on positioning information, and to meet the traction demand of a medium-high speed magnetic levitation train.
Step A, the speed measuring system acquires position-related information of a train. The position-related information includes a train speed, a magnetic pole phase angle, and an absolute train position.
Step B, the speed measuring system sends the acquired position-related information to the traction system through a signal system.
Step C, the traction system performs closed-loop control on the position of the train based on the position-related information. The closed-loop control process includes: using a train kinetic equation, a linear motor mathematical formula and motor parameters to establish a model, performing vector control based on rotor field orientation to achieve dynamic decoupling of a torque and a flux linkage, so as to realize continuous control. According to the magnetic levitation directional control theory, in order to realize decoupling control, the stator current must be strictly controlled. To achieve the vertical control of a stator current vector and a rotor vector, three control closed-loops of position, speed and current are included. By comparing the actual position of the train with a given position, the speed and current are calculated. It is necessary to detect or observe the position of a magnetic pole phase angle of the rotor in real time during the control process. Main reference: 1) according to the line information, that is, a coil period length of 516mm, and a position sensor resolution of 3°, that is 4.3mm; 2) according to the acquired train speed, the magnetic pole phase angle, the absolute train position information and time information, performing least squares fitting to estimate the train position information at this time; and 3) calculating the delay and jitter amount of the magnetic pole phase angle by simulation, calculating a compensation amount, and correcting the position of a rotor magnetic pole phase angle by using the compensation amount. During the start of the train, the speed is very low, the magnetic pole precision is high, effective traction of the train is realized, and the dynamic performance is superior. When the speed exceeds 3.3m/s, the speed measurement resolution often does not meet the control requirements, and a back electromotive force generated by the magnetic pole must be used to estimate the current speed and the phase relationship between the magnetic pole and stator magnetic levitation.

The signal system includes a vehicle-carried wireless communication system and a terrestrial wireless communication system, the speed measuring system is connected with the vehicle-carried wireless communication system, the traction system is connected with the terrestrial wireless communication system, and the vehicle-carried wireless communication system is connected with the terrestrial wireless communication system through a mature and cheap 4G-LTE wireless communication network; and the position-related information is sent to the traction system through the vehicle-carried wireless communication system, the 4G-LTE wireless communication network and the terrestrial wireless communication system in sequence.

The present invention further provides precision correction method for a position control ring of a magnetic levitation train traction system, including:
a speed measuring system, used for acquiring position-related information of a train;
a signal system, used for receiving the position-related information sent by the speed measuring system, and sending the position-related information to a traction system;
the traction system, used for performing closed-loop control on the position of the train based on the position-related information;
wherein the system further comprises:
   a time synchronization system, used for synchronizing the time of the speed measuring system, the time of the signal system and the time of the traction system by using a Beidou system and/or a GPS system, and adding timestamp information.

The signal system includes a vehicle-carried wireless communication system and a terrestrial wireless communication system, the speed measuring system is connected with the vehicle-carried wireless communication system, the traction system is connected with the terrestrial wireless communication system, and the vehicle-carried wireless communication system is connected with the terrestrial wireless communication system through a 4G-LTE wireless communication network.

The position-related information acquired by the speed measuring system includes a train speed, a magnetic pole phase angle, and an absolute train position.

The closed-loop control process of the traction system includes: using a train kinetic equation, a linear motor mathematical formula and motor parameters to establish a model, performing vector control based on rotor field orientation to achieve dynamic decoupling of a torque and a flux linkage, so as to realize continuous control. According to the magnetic levitation directional control theory, in order to realize decoupling control, the stator current must be strictly controlled. To achieve the vertical control of a stator current vector and a rotor vector, three control closed-loops of position, speed and current are included. By comparing the actual position of the train with a given position, the speed and current are calculated. It is necessary to detect or observe the position of a magnetic pole phase angle of the rotor in real time during the control process. Main reference: 1) according to the line information, that is, a coil period length of 516mm, and a position sensor resolution of 3°, that is 4.3mm; 2) according to the acquired train speed, the magnetic pole phase angle, the absolute train position information and time information, performing least squares fitting to estimate the train position information at this time; and 3) calculating the delay and jitter amount of the magnetic pole phase angle by simulation, calculating a compensation amount, and correcting the position of a rotor magnetic pole phase angle by using the compensation amount. During the start of the train, the speed is very low, the magnetic pole precision is high, effective traction of the train is realized, and the dynamic performance is superior. When the speed exceeds 3.3m/s, the speed measurement resolution often does not meet the control requirements, and a back electromotive force generated by the magnetic pole must be used to estimate the current speed and the phase relationship between the magnetic pole and stator magnetic levitation.

The embodiments of the present invention are described above, but the present invention is not limited to the above-mentioned specific embodiments. The above-mentioned specific embodiments are only illustrative and not restrictive. Those of ordinary skill in the art can still make a lot of forms under the enlightenment of the present invention, without departing from the purpose of the present invention and the protection scope of the claims, and these all fall within the protection scope of the present invention.

## Claims

1. A precision correction method for a position control ring of a magnetic levitation train traction system, comprising:
step A, acquiring, by a speed measuring system, position-related information of a train;
step B, sending, by the speed measuring system, the acquired position-related information to a traction system through a signal system;
step C, performing, by the traction system, closed-loop control on the position of the train based on the position-related information;
**characterized in that**, before step A, the method further comprises:
step A1, synchronizing the time of the speed measuring system, the time of the signal system and the time of the traction system, and adding timestamp information.

2. The precision correction method for the position control ring of the magnetic levitation train traction system of claim 1, wherein the signal system comprises a vehicle-carried wireless communication system and a terrestrial wireless communication system, the speed measuring system is connected with the vehicle-carried wireless communication system, the traction system is connected with the terrestrial wireless communication system, and the vehicle-carried wireless communication system is connected with the terrestrial wireless communication system through a 4G-LTE wireless communication network; and
the position-related information is sent to the traction system through the vehicle-carried wireless communication system, the 4G-LTE wireless communication network and the terrestrial wireless communication system in sequence.

3. The precision correction method for the position control ring of the magnetic levitation train traction system of claim 1, wherein the position-related information comprises a train speed, a magnetic pole phase angle, and an absolute train position.

4. The precision correction method for the position control ring of the magnetic levitation train traction system of claim 3, wherein in the step C, the closed-loop control process comprises:
using a train kinetic equation, a linear motor mathematical formula and motor parameters to establish a model, performing vector control based on rotor field orientation to achieve dynamic decoupling of a torque and a flux linkage, so as to realize continuous control;
according to the acquired train speed, the magnetic pole phase angle, the absolute train position information and time information, performing least squares fitting to estimate the train position information at this time; and
calculating the delay and jitter amount of the magnetic pole phase angle by simulation, calculating a compensation amount, and correcting the position of a rotor magnetic pole phase angle by using the compensation amount.

5. The precision correction method for the position control ring of the magnetic levitation train traction system of claim 1, wherein a Beidou system and/or a GPS system is used for synchronizing the time of the speed measuring system, the time of the signal system and the time of the traction system.

6. A precision correction method for a position control ring of a magnetic levitation train traction system, comprising:
a speed measuring system, used for acquiring position-related information of a train;
a signal system, used for receiving the position-related information sent by the speed measuring system, and sending the position-related information to a traction system;
the traction system, used for performing closed-loop control on the position of the train based on the position-related information;
**characterized in that** the system further comprises:
a time synchronization system, used for synchronizing the time of the speed measuring system, the time of the signal system and the time of the traction system, and adding timestamp information.

7. The precision correction system for the position control ring of the magnetic levitation train traction system of claim 6, wherein the signal system comprises a vehicle-carried wireless communication system and a terrestrial wireless communication system, the speed measuring system is connected with the vehicle-carried wireless communication system, the traction system is connected with the terrestrial wireless communication system, and the vehicle-carried wireless communication system is connected with the terrestrial wireless communication system through a 4G-LTE wireless communication network.

8. The precision correction system for the position control ring of the magnetic levitation train traction system of claim 6, wherein the position-related information acquired by the speed measuring system comprises a train speed, a magnetic pole phase angle, and an absolute train position.

9. The precision correction system for the position control ring of the magnetic levitation train traction system of claim 8, wherein the closed-loop control process of the traction system comprises:
using a train kinetic equation, a linear motor mathematical formula and motor parameters to establish a model, performing vector control based on rotor field orientation to achieve dynamic decoupling of a torque and a flux linkage, so as to realize continuous control;
according to the acquired train speed, the magnetic pole phase angle, the absolute train position information and time information, performing least squares fitting to estimate the train position information at this time; and
calculating the delay and jitter amount of the magnetic pole phase angle by simulation, calculating a compensation amount, and correcting the position of a rotor magnetic pole phase angle by using the compensation amount.

10. The precision correction system for the position control ring of the magnetic levitation train traction system of claim 6, wherein the time synchronization system uses a Beidou system and/or a GPS system to synchronize the time of the speed measuring system, the time of the signal system and the time of the traction system.
